# EUROPEAN PATENT APPLICATION

(11) **EP 4 286 489 A1**
(43) Date of publication of application: **06.12.2023**
(21) Application number: 22746041.7
(22) Date of filing: 28.01.2022
(51) Int. Cl.: C09J 175/04, C08G 18/10, C08G 18/66, C09J 175/08

(54) **STRUCTURAL POLYURETHANE ADHESIVE**

(30) Priority: 29.01.2021 JP 2021013470
(71) Applicant: Mitsui Chemicals, Inc., Tokyo 104-0028 (JP)
(72) Inventor: CHIKAMOTO, Takuya, Sodegaura-shi, Chiba 299-0265 (JP); YAJIMA, Tatsuya, Sodegaura-shi, Chiba 299-0265 (JP); YAMAMOTO, Naomi, Tokyo 105-7122 (JP)
(74) Representative: Hoffmann Eitle
(86) International application number: PCT/JP2022/003373
(87) International publication number: WO 2022/163822

(57) **Abstract**

A structural polyurethane adhesive contains a polyisocyanate component and a polyol component. The polyisocyanate component contains an isocyanate group-terminated urethane prepolymer that is a reaction product of a first material polyisocyanate containing an aromatic polyisocyanate and a first material polyol containing a macropolyol. The polyol component contains: a hydroxyl group-terminated urethane prepolymer that is a reaction product of a second material polyisocyanate containing an araliphatic polyisocyanate and/or an alicyclic polyisocyanate and a second material polyol containing a macropolyol; and a low molecular-weight polyol.

## Description

### TECHNICAL FIELD

The present invention relates to a structural polyurethane adhesive.

### BACKGROUND ART

Conventionally, polyurethane adhesive has widely been used in various industrial fields. As such polyurethane adhesive, for example, a two-component curable polyurethane adhesive including a polyisocyanate component and a polyol component has been known.

For the two-component curable polyurethane adhesive, for example, the following formulation has been proposed. That is to say, a two-component coating agent contains a urethane prepolymer composition and a polyisocyanate cross-linking agent, and the urethane prepolymer composition contains a reaction product of hexamethylene diisocyanate with a copolycarbonate diol and ethylene glycol. Further, such a two-component coating agent is used for producing synthetic leather (for example, see Patent Document 1 (Example 1 and Application Example 1)).

### Citation List

### Patent Document

Patent Document 1: Japanese Unexamined Patent Publication No. 2014-105250

### SUMMARY OF THE INVENTION

### PROBLEM TO BE SOLVED BY THE INVENTION

On the other hand, the properties that the polyurethane adhesive is required vary depending on the field of use. For example, when the polyurethane adhesive is used for bonding a plurality of members in a structure that is formed from the members, the polyurethane adhesive is required to have a particularly excellent adhesive strength. In view of this, disadvantageously, the above-described polyurethane adhesive does not have sufficient adhesive properties.

The present invention provides a structural polyurethane adhesive having excellent adhesive properties.

### MEANS FOR SOLVING THE PROBLEM

The present invention [1] includes a structural polyurethane adhesive including: a polyisocyanate component; and a polyol component, wherein the polyisocyanate component contains an isocyanate group-terminated urethane prepolymer that is a reaction product of a first material polyisocyanate containing an aromatic polyisocyanate and a first material polyol containing a macropolyol, and wherein the polyol component contains: a hydroxyl group-terminated urethane prepolymer that is a reaction product of a second material polyisocyanate containing an araliphatic polyisocyanate and a second material polyol containing a macropolyol; and a low molecular-weight polyol.

The present invention [2] includes the structural polyurethane adhesive described in the above-described [1], wherein a ratio of the hydroxyl group-terminated urethane prepolymer with respect to a total amount of the polyol component is 2% by mass or more and 30% by mass or less.

The present invention [3] includes the structural polyurethane adhesive described in the above-described [1] or [2], wherein the polyisocyanate component further contains a carbodiimide-modified product of an aromatic polyisocyanate monomer.

The present invention [4] includes the structural polyurethane adhesive described in any one of the above-described [1] to [3], wherein the polyol component further contains a polyether polyol having an average number of hydroxyl groups of 3 or more.

The present invention [5] includes the structural polyurethane adhesive described in any one of the above-described [1] to [4], wherein the first material polyisocyanate contains diphenylmethane diisocyanate.

The present invention [6] includes the structural polyurethane adhesive described in any one of the above-described [1] to [5], wherein the second material polyisocyanate contains xylylene diisocyanate.

The present invention [7] includes the structural polyurethane adhesive described in any one of the above-described [1] to [6], wherein the hydroxyl group-terminated urethane prepolymer has a hydroxyl equivalent of 550 or less.

The present invention [8] includes the structural polyurethane adhesive described in any one of the above-described [1] to [7], being a two-component curable adhesive including a main agent containing the polyisocyanate component and a curing agent containing the polyol component.

The present invention [9] includes the structural polyurethane adhesive described in any one of the above-described [1] to [8], being a solventless-type adhesive.

### EFFECTS OF THE INVENTION

In the structural polyurethane adhesive of the present invention, the polyisocyanate component contains an isocyanate group-terminated urethane prepolymer that is a reaction product of a first material polyisocyanate containing an aromatic polyisocyanate and a first material polyol containing a macropolyol. Further, the polyol component contains a hydroxyl group-terminated urethane prepolymer that is a reaction product of a second material polyisocyanate containing an araliphatic polyisocyanate and a second material polyol containing a macropolyol, and a low molecular-weight polyol. Thus, the structural polyurethane of the present invention has excellent adhesive properties.

### DESCRIPTION OF THE EMBODIMENTS

The structural polyurethane adhesive of the present invention is a structural adhesive defined by JIS K 6800 (1985). Specifically, the structural polyurethane adhesive is a "reliable adhesive that can bear heavy loads for a long period of time".

More specifically, the structural polyurethane adhesive contains a polyisocyanate component and a polyol component as essential components. The polyisocyanate component contains a liberated (free) isocyanate group. The polyol component contains a liberated (free) hydroxyl group.

The structural polyurethane adhesive may be a one-component curable adhesive in which a polyisocyanate component and a polyol component are mixed in advance. Alternatively, the structural polyurethane adhesive may be a two-component curable adhesive that includes a main agent (A solution) containing a polyisocyanate component, and a curing agent (B solution) containing a polyol component. For the two-component curable adhesive, the main agent and curing agent that are individually prepared are mixed together when being used. In view of workability, handleability, etc., the structural polyurethane adhesive is preferably a two-component curable adhesive.

The polyisocyanate component contains a urethane prepolymer having two or more isocyanate groups at its molecule terminals (hereinafter, referred to as an isocyanate group-terminated urethane prepolymer).

The isocyanate group-terminated urethane prepolymer is a reaction product of the first material polyisocyanate and the first material polyol. The first material polyisocyanate and the first material polyol are reacted so that the isocyanate group exceeds the hydroxyl group.

The first material polyisocyanate contains an aromatic polyisocyanate and preferably consists of an aromatic polyisocyanate. Examples of the aromatic polyisocyanate include an aromatic polyisocyanate monomer and an aromatic polyisocyanate derivative.

Examples of the aromatic polyisocyanate monomer include an aromatic diisocyanate. Examples of the aromatic diisocyanate include tolylene diisocyanate, phenylene diisocyanate, diphenyl diisocyanate, naphthalene diisocyanate, diphenyl methane diisocyanate, toluidine diisocyanate, and diphenyl ether diisocyanate. These can be used singly or in combination of two or more.

Examples of the aromatic polyisocyanate derivative include a modified product obtained by modifying the above-described aromatic polyisocyanate monomer by a known method. More specifically, examples of the aromatic polyisocyanate derivative include a multimer, an isocyanurate-modified product, an allophanate-modified product, a polyol-modified product, a biuret-modified product, a urea-modified product, an oxadiazinetrione-modified product, and a carbodiimide-modified product. Examples of the aromatic polyisocyanate derivative further include polymethylenepolyphenylene polyisocyanate. These can be used singly or in combination of two or more or more.

These aromatic polyisocyanates can be used singly or in combination of two or more. As the aromatic polyisocyanate, in view of adhesive properties, an aromatic polyisocyanate monomer is preferable, an aromatic diisocyanate is more preferable, and diphenylmethane diisocyanate is even more preferable.

In other words, the first material polyisocyanate preferably contains diphenylmethane diisocyanate, and more preferably consists of diphenylmethane diisocyanate.

The first material polyol contains a macropolyol as an essential component. The macropolyol is an organic compound having two or more hydroxyl groups and having a relatively high molecular weight.

The macropolyol in the first material polyol (hereinafter, referred to as the first macropolyol) has a number average molecular weight of 200 or more. Further, the first macropolyol normally has a number average molecular weight of 15000 or less. The number average molecular weight is calibrated with standard polystyrene measured with gel permeation chromatograph (hereinafter, the same applies).

Among the second macropolyols described below, the one having a molecular weight of 200 or more and 15000 or less is used as the first macropolyol. As the first macropolyol, a polyether polyol (described below), a polyester polyol (described below), and a polycarbonate polyol (described below) are preferable, and a polyether polyol (described below) is more preferable.

The first macropolyol has a number average molecular weight of, for example, 200 or more, preferably 300 or more, more preferably 400 or more. Further, the number average molecular weight of the first macropolyol is, for example, 15000 or less, preferably 13000 or less, more preferably 12000 or less, even more preferably 10000 or less, even more preferably 8000 or less, particularly preferably 5000 or less.

The first macropolyol has a hydroxyl equivalent of, for example, 150 or more, preferably 200 or more. Further, the hydroxyl equivalent of the first macropolyol is, for example, 10000 or less, preferably 8000 or less. The hydroxyl equivalent can be calculated from the hydroxyl value.

The first macropolyol has an average number of hydroxyl groups of, for example, 1.8 or more, preferably 2 or more. Further, the average number of hydroxyl groups of the first macropolyol is, for example, 6 or less, preferably 4 or less, more preferably 3 or less.

The hydroxyl value and the hydroxyl equivalent can be obtained in accordance with the A method or B method of JIS K 1557-1 (2007). Further, the average number of hydroxyl groups can be calculated from the hydroxyl value, the hydroxyl equivalent, and the molecular weight. Furthermore, the hydroxyl value, the hydroxyl equivalent, and the average number of hydroxyl groups can be calculated from the charged ratio of the material components (the same applies hereinafter).

As the first material polyol, particularly preferably, a first macropolyol having an average number of hydroxyl groups of 2 and a first macropolyol having an average number of hydroxyl groups of 3 are used in combination.

When the first macropolyol having an average number of hydroxyl groups of 2 and the first macropolyol having an average number of hydroxyl groups of 3 are used in combination, the first macropolyol having an average number of hydroxyl groups of 3 is, for example, more than 50 parts by mass, preferably 60 parts by mass or more with respect to 100 parts by mass of the total amount of the first macropolyols. Further, the first macropolyol having an average number of hydroxyl groups of 3 is, for example, 90 parts by mass or less, preferably 80 parts by mass or less. Furthermore, the first macropolyol having an average number of hydroxyl groups of 2 is, for example, 10 parts by mass or more, preferably 20 parts by mass or more. The first macropolyol having an average number of hydroxyl groups of 2 is, for example, less than 50 parts by mass, preferably 40 parts by mass or less.

Furthermore, the first material polyol contains a low molecular-weight polyol as an optional component. The low molecular-weight polyol is an organic compound having two or more hydroxyl groups and having a relatively low molecular weight.

The low molecular-weight polyol in the first material polyol (hereinafter, referred to as the first low molecular-weight polyol) has a molecular weight of less than 200, preferably 180 or less.

Examples of the first low molecular-weight polyol include dihydric alcohols, trihydric alcohols, and tetrahydric or more alcohols. Examples of the dihydric alcohols include ethylene glycol, 1,2-propanediol, 1,3-propanediol, 1,2-butanediol, 1,3-butanediol, 1,4-butanediol, 1,5-pentanediol, 1,6-hexanediol, neopentyl glycol, diethylene glycol, triethylene glycol, and dipropylene glycol. Examples of the trihydric alcohols include glycerin and trimethylol propane. Examples of the tetrahydric or more alcohols include pentaerythritol and diglycerin. These can be used singly or in combination of two or more.

The content ratio of the first low molecular-weight polyol is appropriately selected in a range in which the excellent effects of the present invention are not reduced. More specifically, the content ratio of the first low molecular-weight polyol is, for example, 30 parts by mass or less, preferably 20 parts by mass or less, more preferably 10 parts by mass or less, particularly preferably 0 part by mass with respect to 100 parts by mass of the total amount of the first material polyols. That is to say, in view of adhesive properties, the first material polyol preferably does not contain the first low molecular-weight polyol and consists of the first macropolyol.

Then, the isocyanate group-terminated urethane prepolymer is obtained by reacting the first material polyisocyanate with the first material polyol by a known method. More specifically, the first material polyisocyanate and the first material polyol are blended in a predetermined ratio, thereby causing a urethane-forming reaction.

In the urethane-forming reaction, the equivalent ratio (NCO/OH) of the isocyanate group in the first material polyisocyanate with respect to the hydroxyl group in the first material polyol is, for example, more than 1, preferably 1.1 or more, more preferably 1.3 or more, even more preferably 1.5 or more, particularly preferably 1.9 or more. Further, the equivalent ratio (NCO/OH) is, for example, 50, preferably 15 or less, more preferably 10 or less, even more preferably 3 or less, particularly preferably 2.5 or less.

In the urethane-forming reaction, a known polymerization method is employed. Examples of the polymerization method include bulk polymerization and solution polymerization. In the bulk polymerization, for example, the above-described components are blended to allow them to react under a nitrogen atmosphere. In the solution polymerization, for example, the above-described component is added to a known organic solvent to allow them to react under a nitrogen atmosphere. The urethane-forming reaction is carried out at a reaction temperature of, for example, 50°C or more, and, for example, 120°C or less, preferably 100°C or less. Further, the reaction is carried out for a reaction time of, for example, 0.5 hour or more, preferably, 1 hour or more, and, for example, 24 hours or less, preferably 15 hours or less. In the solution polymerization, the blending ratio of the organic solvent is appropriately set depending on the purpose and use. For the urethane-forming reaction, bulk polymerization (solventless reaction) is preferably employed.

Further, in the above-described urethane-forming reaction, a known urethane-forming catalyst is added as necessary. Furthermore, the unreacted polyisocyanate is removed by a known method as necessary. In this manner, a first isocyanate component containing the isocyanate group-terminated urethane prepolymer is obtained.

As the isocyanate group-terminated urethane prepolymer, an isocyanate group-terminated urethane prepolymer that is a reaction product of an aromatic polyisocyanate and a polyether polyol is preferable, and an isocyanate group-terminated urethane prepolymer that is a reaction product of diphenylmethane diisocyanate and a polyether polyol is more preferable.

Further, as necessary, the polyisocyanate component may contain a liberated (unreacted) first material polyisocyanate, an organic solvent, and a urethane-forming catalyst. Furthermore, the liberated (unreacted) first material polyisocyanate, the organic solvent, and the urethane-forming catalyst may be removed by a known removal method. Examples of the removal method include extraction and distillation.

The content ratio of the liberated (unreacted) first material polyisocyanate is, in view of adhesive properties, with respect to the total amount of the polyisocyanate component is, for example, 8.0% by mass or less, preferably 5.0% by mass or less.

The isocyanate group-terminated urethane prepolymer has an average number of isocyanate groups of, for example, 1.2 or more, preferably 1.5 or more, more preferably 2 or more. Further, the average number of the isocyanate groups of the first isocyanate component (solid content) is, for example, 4 or less, preferably 3 or less.

The isocyanate group-terminated urethane prepolymer (solid content) has an isocyanate equivalent of, for example, 84 or more, preferably 150 or more, more preferably 168 or more. Further, the isocyanate equivalent of the isocyanate group-terminated urethane prepolymer (solid content) is, for example, 3500 or less, preferably 2800 or less, more preferably 2335 or less. The isocyanate equivalent is the same as the amine equivalent, and can be obtained by the A method or B method of JIS K 1603-1 (2007).

The content amount (the isocyanate group content, NCO%) of the isocyanate group of the isocyanate group-terminated urethane prepolymer (solid content) is, for example, 1.2% by mass or more, preferably 1.5% by mass or more, more preferably 1.8% by mass or more, even more preferably 2.0% by mass or more, particularly preferably 2.1% by mass or more. Further, the content amount of the isocyanate group of the isocyanate group-terminated urethane prepolymer (solid content) is, for example, 50% by mass or less, preferably 28% by mass or less, more preferably 25% by mass or less, even more preferably 10% by mass or less, particularly preferably 6% by mass or less.

The solid content of the isocyanate group-terminated urethane prepolymer has a viscosity at 25°C of, for example, 1000 mPa·s or more, preferably 5000 mPa·s or more. Further, the viscosity of the solid content of the isocyanate group-terminated urethane prepolymer at 25°C is, for example, 200000 mPa·s or less, preferably 100000 mPa·s or less. The viscosity is measured with a B-type viscometer (the same applies hereinafter).

The polyisocyanate component may contain another polyisocyanate as an optional component. The other polyisocyanate is an isocyanate compound other than the above-described isocyanate group-terminated urethane prepolymer.

Examples of the other polyisocyanate include a polyisocyanate monomer and a polyisocyanate derivative.

Examples of the polyisocyanate monomer include an aromatic polyisocyanate monomer, an araliphatic polyisocyanate monomer, an alicyclic polyisocyanate monomer, and a chain aliphatic polyisocyanate monomer.

Examples of the aromatic polyisocyanate monomer include the above-described aromatic polyisocyanate monomers. Examples of the araliphatic polyisocyanate monomer include the araliphatic polyisocyanate monomer described below. Examples of the alicyclic polyisocyanate monomer include the alicyclic polyisocyanate monomer described below. Examples of the chain aliphatic polyisocyanate monomer include ethylene diisocyanate, trimethylene diisocyanate, tetramethylene diisocyanate, pentamethylene diisocyanate (PDI), and hexamethylene diisocyanate (HDI).

Examples of the polyisocyanate derivative include a modified product of the above-described polyisocyanate monomer. Examples of the modified product include a multimer, an isocyanurate-modified product, an allophanate-modified product, a polyol-modified product, a biuret-modified product, a urea-modified product, an oxadiazinetrione-modified product, and a carbodiimide-modified product. These can be used singly or in combination of two or more.

As the polyisocyanate derivative, a derivative of an aromatic polyisocyanate monomer (hereinafter, referred to as an aromatic polyisocyanate derivative) is preferable, and a carbodiimide-modified product of an aromatic polyisocyanate monomer is more preferable.

In other words, the polyisocyanate component preferably contains an aromatic polyisocyanate derivative, and more preferably contains a carbodiimide-modified product of an aromatic polyisocyanate monomer.

The carbodiimide-modified product of an aromatic polyisocyanate monomer is a reaction product obtained by subjecting an aromatic polyisocyanate monomer to a carbodiimide-forming reaction.

As the aromatic polyisocyanate, an aromatic diisocyanate is preferable, and diphenylmethane diisocyanate is more preferable.

Examples of the carbodiimide-forming reaction include a decarboxylation condensation reaction. For the decarboxylation condensation reaction, for example, an aromatic polyisocyanate monomer is heated under the presence of a carbodiimide-forming catalyst.

The carbodiimide-forming catalyst is not especially limited. Examples thereof include a trialkyl phosphate compound, a phosphorene oxide compound, a phosphorene sulfide compound, a phosphine oxide compound, and a phosphine compound. The blending ratio of the carbodiimide-forming catalyst is appropriately set. Further, the reaction conditions for the carbodiimide-forming reaction are appropriately set depending on the type of the aromatic polyisocyanate monomer and the type of the catalyst.

Furthermore, as necessary, an aromatic polyisocyanate monomer may be subjected to a carbodiimide-forming reaction under the presence of the above-described organic solvent.

By the carbodiimide-forming reaction, the aromatic polyisocyanate monomer is decarboxylated and condensed, thereby generating a carbodiimide group. As a result, a carbodiimide-modified product of an aromatic polyisocyanate monomer is produced.

Further, as necessary, the carbodiimide-modified product of an aromatic polyisocyanate monomer may contain a liberated (unreacted) aromatic polyisocyanate monomer, an organic solvent, and a carbodiimide-forming catalyst. Furthermore, the liberated (unreacted) aromatic polyisocyanate monomer, the organic solvent, and the carbodiimide-forming catalyst may be removed by a known removal method. Examples of the removal method include extraction and distillation.

Further, a commercial product may be used as the carbodiimide-modified product of an aromatic polyisocyanate monomer. Examples of the commercial product include CORONATE MX (a carbodiimide-modified product of diphenylmethane diisocyanate, with an NCO content of 29.0% by mass, manufactured by Tosoh Corporation).

Furthermore, examples of the other polyisocyanate as an optional component include another isocyanate group-terminated urethane prepolymer. The other isocyanate group-terminated urethane prepolymer is an isocyanate group-terminated urethane prepolymer other than the isocyanate group-terminated urethane prepolymer that is a reaction product of the first material polyisocyanate and the first material polyol.

More specifically, examples of the other isocyanate group-terminated urethane prepolymer include an isocyanate group-terminated urethane prepolymer obtained by using an araliphatic polyisocyanate (hereinafter, referred to as an isocyanate group-terminated araliphatic urethane prepolymer), an isocyanate group-terminated urethane prepolymer obtained by using an alicyclic polyisocyanate (hereinafter, referred to as an isocyanate group-terminated alicyclic urethane prepolymer), and an isocyanate group-terminated urethane prepolymer obtained by using a chain aliphatic polyisocyanate (hereinafter, referred to as an isocyanate group-terminated chain aliphatic urethane prepolymer). These can be used singly or in combination of two or more.

As the other isocyanate group-terminated urethane prepolymer, an isocyanate group-terminated araliphatic urethane prepolymer is preferable.

In other words, the polyisocyanate component preferably contains another isocyanate group-terminated urethane prepolymer, and more preferably contains another isocyanate group-terminated araliphatic urethane prepolymer.

The isocyanate group-terminated araliphatic urethane prepolymer is obtained, for example, by a reaction of an araliphatic polyisocyanate monomer and/or derivative with the above-described first macropolyol. The araliphatic polyisocyanate monomer and/or derivative are/is reacted with the first macropolyol so that the isocyanate group exceeds the hydroxyl group. A known method is employed for the reaction.

These other polyisocyanates can be used singly or in combination of two or more. As the other polyisocyanate, a polyisocyanate derivative and another isocyanate group-terminated urethane prepolymer are preferable, a polyisocyanate derivative is more preferable, an aromatic polyisocyanates derivative is even more preferable, and a carbodiimide-modified product of an aromatic polyisocyanate monomer is particularly preferable.

In the polyisocyanate component, the ratios of the isocyanate group-terminated urethane prepolymer and another polyisocyanate are appropriately set depending on the purpose and use. For example, with respect to the total amount of the isocyanate group-terminated urethane prepolymer and another polyisocyanate, the ratio of the isocyanate group-terminated urethane prepolymer is, for example, 30% by mass or more, preferably 40% by mass or more, more preferably 50% by mass or more. Further, the ratio of the isocyanate group-terminated urethane prepolymer is, for example, 100% by mass or less, preferably 90% by mass or less, more preferably 80% by mass or less.

Further, with respect to the total amount of the isocyanate group-terminated urethane prepolymer and another polyisocyanate, the ratio of the other polyisocyanate is, for example, 0% by mass or more, preferably 10% by mass or more, more preferably 20% by mass or more. Furthermore, the ratio of the other polyisocyanate is, for example, 70% by mass or less, preferably 60% by mass or less, more preferably 50% by mass or less.

The solid content of the polyisocyanate component at 25°C has a viscosity of, for example, 1000 mPa·s or more, preferably 5000 mPa·s or more, and, for example, 200000 mPa·s or less, preferably 100000 mPa·s or less.

The polyol component contains a urethane prepolymer having two or more hydroxyl groups at its molecule terminals (hereinafter, referred to as a hydroxyl group-terminated urethane prepolymer) as an essential component.

The hydroxyl group-terminated urethane prepolymer is a reaction product of the second material polyisocyanate and a second material polyol. The second material polyisocyanate is reacted with the second material polyol so that isocyanate group falls short of the hydroxyl group.

The second material polyisocyanate contains an araliphatic polyisocyanate and/or an alicyclic polyisocyanate, and preferably consists of an araliphatic polyisocyanate and/or an alicyclic polyisocyanate.

Examples of the araliphatic polyisocyanate include an araliphatic polyisocyanate monomer and an araliphatic polyisocyanate derivative.

Examples of the araliphatic polyisocyanate monomer include an araliphatic diisocyanate. Examples of the araliphatic diisocyanate include 1,3-xylylene diisocyanate (1,3-XDI), 1,4-xylylene diisocyanate (1,4-XDI), tetramethyl xylylene diisocyanate, and co,co' -diisocyanate-1,4-diethylbenzene. These can be used singly or in combination of two or more.

Examples of the araliphatic polyisocyanate derivative include the same modified products as the above-described aromatic polyisocyanates derivatives. More specifically, examples of the araliphatic polyisocyanate derivative include a multimer, an isocyanurate-modified product, an allophanate-modified product, a polyol-modified product, a biuret-modified product, a urea-modified product, an oxadiazinetrione-modified product, and a carbodiimide-modified product. These can be used singly or in combination of two or more.

Examples of the alicyclic polyisocyanate include an alicyclic polyisocyanate monomer and an alicyclic polyisocyanate derivative.

Examples of the alicyclic polyisocyanate monomer include an alicyclic diisocyanate. Examples of the alicyclic diisocyanate include isophorone diisocyanate (IPDI), norbornene diisocyanate (NBDI), methylene bis (cyclohexyl isocyanate) (H₁₂MDI), and bis (isocyanatomethyl) cyclohexane (H₆XDI). These can be used singly or in combination of two or more.

Examples of the alicyclic polyisocyanate derivative include the same modified products as the above-described aromatic polyisocyanates derivatives. More specifically, examples of the alicyclic polyisocyanate derivative include a multimer, an isocyanurate-modified product, an allophanate-modified product, a polyol-modified product, a biuret-modified product, a urea-modified product, an oxadiazinetrione-modified product, and a carbodiimide-modified product. These can be used singly or in combination of two or more.

These araliphatic polyisocyanates and/or alicyclic polyisocyanates can be used singly or in combination of two or more. In view of adhesive properties, as the araliphatic polyisocyanate and/or alicyclic polyisocyanate, an araliphatic polyisocyanate monomer is preferable, an araliphatic diisocyanate is more preferable, xylylene diisocyanate is even more preferable, and 1,3-xylylene diisocyanate is particularly preferable. In other words, the araliphatic polyisocyanate preferably consists of xylylene diisocyanate, more preferably consists of 1,3-xylylene diisocyanate.

The second material polyol contains a macropolyol as an essential component.

The macropolyol in the second material polyol (hereinafter, referred to as the second macropolyol) has a number average molecular weight of 100 or more. Further, the number average molecular weight of the second macropolyol is normally 15000 or less.

More specifically, examples of the second macropolyol include a polyether polyol, a polyester polyol, a polycarbonate polyol, a polyurethane polyol, an epoxy polyol, a vegetable oil polyol, a polyolefin polyol, an acrylic polyol and a vinyl monomer-modified polyol. These second macropolyols can be used singly or in combination of two or more. As the second macropolyol, a polyether polyol, a polyester polyol, and a polycarbonate polyol are preferable.

Examples of the polyether polyol include a polyoxyalkylene (C2-3) polyol and a polytetramethylene ether polyol. A polyoxyalkylene (C2-3) polyol is preferable.

The polyoxy (C2-3) alkylene polyol is an addition polymerization product of an alkylene oxide having 2 to 3 carbon atoms to a known initiator. Examples of the initiator include a known low molecular-weight polyol and a known polyamine compound.

Examples of the alkylene oxide include an alkylene oxide having 2 to 3 carbon atoms. More specifically, examples of the alkylene oxide include ethylene oxide (IUPAC name: oxirane), propylene oxide (1,2-propylene oxide (IUPAC name: methyl oxirane)), and triethylene oxide (1,3-propylene oxide). These alkylene oxides can be used singly or in combination of two or more. As the alkylene oxide, ethylene oxide and propylene oxide are preferable.

More specifically, examples of the polyoxyalkylene (C2-3) polyol include a polyoxyethylene polyol, a polyoxypropylene polyol, a polyoxytriethylene polyol, and a polyoxyethylene-polyoxypropylene polyol (random or block copolymer). These polyoxyalkylene (C2-3) polyols can be used singly or in combination of two or more.

As the polyoxyalkylene (C2-3) polyol, a polyoxypropylene polyol is preferable, polyoxypropylene glycol is more preferable.

As the second macropolyol, a polyether polyol is more preferable, a polyoxy (C2-3) alkylene polyol is even more preferable.

The second macropolyol has a number average molecular weight of, for example, 100 or more, preferably 150 or more, more preferably 180 or more, even more preferably 300 or more, even more preferably 350 or more, further even more preferably 400 or more. Further, the number average molecular weight of the second macropolyol is, for example, 15000 or less, preferably 100000, more preferably 8000 or less, even more preferably 5000 or less, even more preferably 2000 or less, even more preferably 1000 or less, particularly preferably 700 or less.

The second macropolyol has a hydroxyl equivalent of, for example, 90 or more, preferably 120 or more, more preferably 150 or more, even more preferably 200 or more. Further, the hydroxyl equivalent of the second macropolyol is, for example, 1000 or less, preferably 800 or less, more preferably 600 or less, even more preferably 550 or less.

The second macropolyol has an average number of hydroxyl groups of, for example, 1.8 or more, preferably 2 or more. Further, the average number of hydroxyl groups of the second macropolyol is, for example, 6 or less, preferably 4 or less, more preferably 3 or less.

Further, the second material polyol may contain a low molecular-weight polyol as an optional component. The low molecular-weight polyol in the second material polyol (hereinafter, referred to as the second low molecular-weight polyol) has a molecular weight of less than 100, preferably 90 or less.

Among the above-described first low molecular-weight polyols, a first low molecular-weight polyol having a molecular weight of less than 100 is used as the second low molecular-weight polyol. These second low molecular-weight polyols can be used singly or in combination of two or more. The content ratio of the second low molecular-weight polyol is appropriately selected in a range in which the excellent effects of the present invention are not reduced.

More specifically, the content ratio of the second low molecular-weight polyol with respect to 100 parts by mass of the total amount of the second material polyol is, for example, 30 parts by mass or less, preferably 20 parts by mass or less, more preferably 10 parts by mass or less, particularly preferably 0 parts by mass. That is to say, in view of adhesive strength, the second material polyol preferably consists of the second macropolyol.

Further, the hydroxyl group-terminated urethane prepolymer is obtained by reacting the second material polyisocyanate with the second material polyol in a known method. More specifically, the second material polyisocyanate and the second material polyol are blended in a predetermined ratio to cause a urethane-forming reaction.

In the urethane-forming reaction, the equivalent ratio (OH/NCO) of the hydroxyl group in the second material polyol with respect to the isocyanate group in the second material polyisocyanate is appropriately set depending on the average functionality of the second material polyol.

For example, when the second material polyol has an average functionality of 2, the equivalent ratio (OH/NCO) of the hydroxyl group in the second material polyol with respect to the isocyanate group in the second material polyisocyanate is, for example, more than 1, preferably 1.1 or more, more preferably 1.3 or more, even more preferably 1.5 or more, particularly preferably 1.9 or more. Further, the equivalent ratio (OH/NCO) is, for example, 50, preferably 15 or less, more preferably 10 or less, even more preferably 3 or less, particularly preferably 2.5 or less.

Further, when the second material polyol has an average functionality of 3, the equivalent ratio (OH/NCO) of the hydroxyl group in the second material polyol with respect to the isocyanate group in the second material polyisocyanate is, for example, more than 1, preferably 1.1 or more, more preferably 1.3 or more, even more preferably 3 or more, particularly preferably 3.5 or more. Further, the equivalent ratio (OH/NCO) is, for example, 50, preferably 15 or less, more preferably 10 or less, even more preferably 5 or less, particularly preferably 4.5 or less.

In the urethane-forming reaction, a known polymerization method is employed. Examples of the polymerization method include bulk polymerization and solution polymerization. In bulk polymerization, for example, the above-described components are blended and reacted under a nitrogen atmosphere. In solution polymerization, for example, the above-described components are added to a known organic solvent and reacted under a nitrogen atmosphere. The urethane-forming reaction is carried out at a reaction temperature of, for example, 50°C or more, and, for example, 120°C or less, preferably 100°C or less. Further, the reaction is carried out for a reaction time of, for example, 0.5 hours or more, preferably 1 hour or more, and, for example, 48 hours or less, preferably 24 hours or less. In the solution polymerization, the blending ratio of the organic solvent is appropriately set depending on the purpose and use. In the urethane-forming reaction, bulk polymerization (solventless reaction) is preferably employed.

Further, in the above-described urethane-forming reaction, as necessary, a known urethane-forming catalyst is added. Further, as necessary, the unreacted polyisocyanate is removed by a known method. In this manner, a hydroxyl group-terminated urethane prepolymer is produced.

As the hydroxyl group-terminated urethane prepolymer, a hydroxyl group-terminated urethane prepolymer that is a reaction product of an araliphatic polyisocyanate and a polyether polyol is preferable, and a hydroxyl group-terminated urethane prepolymer that is a reaction product of xylylene diisocyanate and a polyether polyol is more preferable.

The hydroxyl group-terminated urethane prepolymer has a number average molecular weight of, for example, 300 or more, preferably 350 or more, more preferably 400 or more. Further, the number average molecular weight of the hydroxyl group-terminated urethane prepolymer is, for example, 10000 or less, preferably 8000 or less, more preferably 5000 or less.

In view of adhesive strength, the hydroxyl group-terminated urethane prepolymer has a hydroxyl equivalent of, for example, 150 or more, preferably 190 or more, more preferably 300 or more, even more preferably 350 or more. Further, the hydroxyl equivalent of the hydroxyl group-terminated urethane prepolymer is, for example, 3100 or less, preferably 2100 or less, more preferably 1500, even more preferably 1100 or less, particularly preferably 1000 or less.

The hydroxyl group-terminated urethane prepolymer has an average number of hydroxyl groups of, for example, 1.8 or more, preferably 2 or more. Further, the average number of hydroxyl groups of the hydroxyl group-terminated urethane prepolymer is, for example, 6 or less, preferably 4 or less, more preferably 3 or less.

Further, if necessary, the hydroxyl group-terminated urethane prepolymer may contain a liberated (unreacted) second material polyol, an organic solvent, and a urethane-forming catalyst. Further, the liberated (unreacted) second material polyol, the organic solvent, and the urethane-forming catalyst may be removed from the hydroxyl group-terminated urethane prepolymer by a known removal method. Examples of the removal method include extraction and distillation.

When the polyol component contains the above-described hydroxyl group-terminated urethane prepolymer, excellent adhesive properties are achieved. Further, when the polyol component contains the above-described hydroxyl group-terminated urethane prepolymer, excellent pot life and rapid curing properties are achieved, and workability improves.

In view of adhesive strength, the content ratio of the hydroxyl group-terminated urethane prepolymer with respect to the total amount of the polyol component is, for example, 1% by mass or more, preferably 2% by mass or more, more preferably 5% by mass or more, even more preferably 8% by mass or more. Further, with respect to the total amount of the polyol component, the ratio of the hydroxyl group-terminated urethane prepolymer is, for example, 100% by mass or less, preferably 80% by mass or less, more preferably 50% by mass or less, even more preferably 30% by mass or less, even more preferably 20% by mass or less, particularly preferably 10% by mass or less.

The polyol component contains a low molecular-weight polyol (hereinafter, referred to as the third low molecular-weight polyol) as an essential component. The third low molecular-weight polyol has a molecular weight of less than 200, preferably 180 or less. Examples of the third low molecular-weight polyol include the above-described first low molecular-weight polyols. These third low molecular-weight polyols can be used singly or in combination of two or more.

The content ratio of the third low molecular-weight polyol with respect to 100 parts by mass of the hydroxyl group-terminated urethane prepolymer is, for example, 10 parts by mass or more, preferably 50 parts by mass or more. Further, the content ratio of the third low molecular-weight polyol with respect to 100 parts by mass of the hydroxyl group-terminated urethane prepolymer is, for example, 1000 parts by mass or less, preferably 300 parts by mass or less.

Further, the polyol component may contain another macropolyol as an optional component. The other macropolyol is a macropolyol other than the above-described hydroxyl group-terminated urethane prepolymer.

Examples of the other macropolyol include a polyether polyol, a polyester polyol, a polycarbonate polyol, an epoxy polyol, a vegetable oil polyol, a polyolefin polyol, an acrylic polyol, and a vinyl monomer-modified polyol. These macropolyols can be used singly or in combination of two or more. As the macropolyol, a polyether polyol is preferable.

Examples of the polyether polyol include the polyether polyols described above as the second material polyols. More specifically, examples of the polyether polyol include a polyoxyalkylene (C2-3) polyol and a polytetramethylene ether polyol. A polyoxyalkylene (C2-3) polyol is preferable.

More specifically, examples of the polyoxyalkylene (C2-3) polyol include a polyoxyethylene polyol, a polyoxypropylene polyol, a polyoxytriethylene polyol, and a polyoxyethylene-polyoxypropylene polyol (random or block copolymer). These polyoxyalkylene (C2-3) polyols can be used singly or in combination of two or more.

In view of adhesive strength, the other macropolyol has a number average molecular weight of, for example, 500 or more, preferably 1000 or more, more preferably 1500 or more. Further, in view of adhesive strength, the number average molecular weight of the macropolyol is 10000 or less, more preferably 7500 or less, more preferably 5000 or less.

The other macropolyol has a hydroxyl equivalent of, for example, 150 or more, preferably 200 or more. Further, the hydroxyl equivalent of the other macropolyol is, for example, 10000 or less, preferably 8000 or less.

In view of cross-link density and adhesive strength, the other macropolyol has an average number of hydroxyl groups of, 1.9 or more, preferably 2 or more, more preferably 2.3 or more, even more preferably 2.5 or more, particularly preferably 3 or more. Further, in view of adhesive strength, the average number of hydroxyl groups of the other macropolyol is, for example, 4 or less, preferably 3.5 or less.

That is to say, the polyol component preferably contains another macropolyol having an average number of hydroxyl groups of 3 or more, and more preferably contains a polyether polyol having an average number of hydroxyl groups of 3 or more.

Further, when the polyol component contains another macropolyol, the content ratio of the other macropolyol with respect to 100 parts by mass of the hydroxyl group-terminated urethane prepolymer is, for example, 100 parts by mass or more, preferably 500 parts by mass or more. Further, the content ratio of the other macropolyol with respect to 100 parts by mass of the hydroxyl group-terminated urethane prepolymer is, for example, 5000 parts by mass or less, preferably 2000 parts by mass or less.

Further, as necessary, the structural polyurethane adhesive may contain an additive. Examples of the additive include plasticizers, fillers, compatibilizing agents, urethane-forming catalysts, anti-aging agents, antioxidants, ultraviolet absorbers, heat-resistant stabilizers, polymer photostabilizers, organic solvents, pigments, dyes, antifoaming agents, dispersants, leveling agents, thixotropy-enhancing agents, antiblocking agents, mold release agents, lubricants, interlayer adjusters, and viscosity modifiers. The content ratio of the additive is not especially limited and is appropriately set depending on the purpose and use.

The additive may be added, for example, to a mixture of a polyisocyanate component and a polyol component (for example, a one-component curable adhesive, etc.). Further, the additive may be contained, for example, in the main agent described below, in the curing agent described below, or in both of them.

On the other hand, in view of workability, the structural polyurethane adhesive preferably does not contain an organic solvent. In other words, the structural polyurethane adhesive is preferably a solventless-type adhesive.

In the solventless-type adhesive, the polyisocyanate component is, for example, prepared without using an organic solvent, or prepared by using an organic solvent and thereafter removing the organic solvent by a known method.

Further, in the solventless-type adhesive, the polyol component is, for example, prepared without using an organic solvent, or preparing by using an organic solvent and thereafter removing the organic solvent by a known method.

Further, as described above, the structural polyurethane adhesive is preferably a two-component curable adhesive including a main agent containing a polyisocyanate component and a curing agent containing a polyol component.

The two-component curable adhesive is a resin composition kit (two-component kit) for forming a cured product by separately preparing the main agent and the curing agent and blending (mixing) them together when using them. In other words, the main agent and the curing agent are mixed, thereby obtaining a resin mixture (polyurethane mixture), and the resin mixture is subjected to a curing reaction, thereby obtaining a cured product (polyurethane cured product).

Then, in the above-described structural polyurethane adhesive, the polyisocyanate component contains an isocyanate group-terminated urethane prepolymer that is a reaction product of the first material polyisocyanate containing an aromatic polyisocyanate and the first material polyol containing a macropolyol (the first macropolyol). Further, the polyol component contains a hydroxyl group-terminated urethane prepolymer that is a reaction product of the second material polyisocyanate containing an araliphatic polyisocyanate and the second material polyol containing a macropolyol (the second macropolyol), and a low molecular-weight polyol (the third low molecular-weight polyol). Thus, the above-described structural polyurethane has excellent adhesive properties.

Thus, the above-described structural polyurethane adhesive is suitably used to bond a plurality of members in a structure (such as an automobile or a building) formed from the members. Examples of the structure include buildings, automobiles, transportation systems, and ships.

In the use of the structural polyurethane adhesive, for example, a mixture containing the polyisocyanate component and the polyol component is applied to the members, cured, and, as necessary, aged by a known method.

In view of workability, the mixture containing the polyisocyanate component and the polyol component has a viscosity at 25°C of, for example, 100 mPa·s or more, preferably 300 mPa·s or more. Further, the viscosity of the mixture at 25°C is, for example, 500000 mPa·s or less, preferably 100000 mPa·s or less, more preferably 50000 mPa·s or less.

Further, the conditions for the curing and the conditions of the aging are appropriately set. More specifically, the curing is carried out at a curing temperature of, for example, 10°C or more, preferably 20°C or more. Further, the curing temperature is, for example, 80°C or less, preferably 60°C or less. Further, the curing is carried out for a curing time of, for example, 0.5 hours or more, preferably 1 hour or more. Further, the curing time is, for example, 10 hours or less, preferably 5 hours or less. Further, the aging is carried out at an aging temperature of, for example, 10°C or more, preferably 20°C or more. Further, the aging temperature is, for example, 80°C or less, preferably 70°C or less. Further, the aging is carried out for an aging time of, for example, 1 hour or more, preferably 2 hours or more. Further, the aging time is, for example, 2 weeks or less, preferably 1 week or less.

In this manner, the structural polyurethane adhesive is cured, and the structural polyurethane adhesive is enabled to bond the members well.

### Example

The present invention is described next with reference to Examples and Comparative Examples. The present invention is not limited to Examples in any way. The "parts" and "%" are based on mass unless otherwise specified. The specific numeral values used in the description below, such as mixing ratios (content ratios), physical property values, and parameters, can be replaced with the corresponding mixing ratios (content ratios), physical property values, and parameters in the above-described "DESCRIPTION OF THE EMBODIMENTS", including the upper limit values (numeral values defined with "or less", and "less than") or the lower limit values (numeral values defined with "or more", and "more than").

### · Polyisocyanate Component

### (Preparation Example 1) Isocyanate Group-terminated Urethane Prepolymer

289 parts by mass of ACTCOL DL4000 (that is a trade name of a polyether polyol having a number average molecular weight of 4000 and an average number of hydroxyl groups of 2, and manufactured by Mitsui Chemicals, Inc.) as the first material polyol, and 578 parts by mass of ACTCOL T-5000 (that is a trade name of a polyether polyol having a number average molecular weight of 5000 and an average number of hydroxyl groups of 3, and manufactured by Mitsui Chemicals, Inc.), and 133 parts by mass of 4,4'-diphenylmethane diisocyanate (MDI) as the first material polyisocyanate were mixed. The equivalent ratio (NCO/OH) was 2.16 at the mixing. In this manner, an isocyanate group-terminated urethane prepolymer (MDI prepolymer) was produced. The concentration of the solid content of the MDI prepolymer was 100% and the content ratio of the isocyanate group was 2.33% by mass.

### (Preparation Example 2) Aromatic Polyisocyanate Derivative

CORONATE MX (a carbodiimide-modified product of diphenylmethane diisocyanate, with an NCO content of 29.0% by mass, manufactured by Tosoh Corporation) was prepared as an aromatic polyisocyanate derivative. Hereinafter, the solid content in CORONATE MX is referred to as MDI carbodiimide.

### (Preparation Example 3) Another Isocyanate Group-terminated Urethane Prepolymer

264.0 parts by mass of ACTCOL D-400 (that is a trade name of a polyether polyol having a number average molecular weight of 400 and an average number of hydroxyl groups of 2, and manufactured by Mitsui Chemicals, Inc.) and 736.0 parts by mass of 1,3-xylylene diisocyanate (XDI) were mixed. The equivalent ratio (NCO/OH) was 6.0 at the mixing. Next, the obtained mixture was stirred at 60°C for 1 hour and further stirred at 70°C for 4 hours in a stream of nitrogen gas to cause a urethane-forming reaction. Further, the reaction product was subjected to a thin-film distillation (at a wall surface temperature of 145 to 155°C, a vacuum degree of 100 Pa or less, a flow rate of 3 to 5 g/min, a cooling water temperature of 10°C) to distill the unreacted 1,3-xylylene diisocyanate (monomer) away therefrom. In this manner, an isocyanate group-terminated urethane prepolymer (XDI prepolymer) was produced. The concentration of the solid content of the XDI prepolymer was 100%, and the content ratio of the isocyanate-group was 10.5% by mass.

### · Polyol Component

### (Preparation Example 4) Hydroxyl Group-terminated Urethane Prepolymer (D-400/XDI)

813.01 parts by mass of ACTCOL D-400 (that is a trade name of a polyether polyol having a number average molecular weight of 400 and an average number of hydroxyl groups of 2, and manufactured by Mitsui Chemicals, Inc.) as the second material polyol and 186.99 parts by mass of 1,3-xylylene diisocyanate (XDI) as the second material polyisocyanate were mixed. The equivalent ratio (OH/NCO) was 2.02 at the mixing. Next, the obtained mixture was stirred at 60°C for 1 hour and further stirred at 70°C for 6 hours in a stream of nitrogen gas to cause a urethane-forming reaction. In this manner, a hydroxyl group-terminated urethane prepolymer was produced.

The hydroxyl group-terminated urethane prepolymer had a hydroxyl value of 493, a concentration of the solid content of 100%, and a viscosity of 4500 mPa s at 25°C.

### (Preparation Example 5) Hydroxyl Group-terminated Urethane Prepolymer (T-700/XDI)

1,3-xylylene diisocyanate (XDI) was used as the second material polyisocyanate. Further, ACTCOL T-700 (that is a trade name of a polyether polyol having a number average molecular weight of 700 and an average number of hydroxyl groups of 3, and manufactured by Mitsui Chemicals, Inc.) was used as the second material polyol. The equivalent ratio (NCO/OH) was set to 3.03. Further, these were reacted at 80°C for 1 hour and thereafter subjected to a urethane-forming reaction at 90°C for 4 hours.

Except for the above, in the same manner as Preparation Example 4, a hydroxyl group-terminated urethane prepolymer was produced. The hydroxyl group-terminated urethane prepolymer had a hydroxyl value of 380, a concentration of the solid content of 100%, and a viscosity of 7400 mPa·s at 25°C.

### (Preparation Example 6) Hydroxyl Group-terminated Urethane Prepolymer (D-1000/MDI)

1,3-xylylene diisocyanate (XDI) was used as the second material polyisocyanate. Further, ACTCOL D-1000 (that is a trade name and a polyether polyol having a number average molecular weight of 1000 and an average number of hydroxyl groups of 2, and manufactured by Mitsui Chemicals, Inc.) was used as the second material polyol. The equivalent ratio (NCO/OH) was set to 2.02. Further, these were reacted at 80°C for 3 hours and thereafter subjected to a urethane-forming reaction at 90°C for 5 hours.

Except for the above, in the same manner as Preparation Example 4, a hydroxyl group-terminated urethane prepolymer was produced. The hydroxyl group-terminated urethane prepolymer had a hydroxyl value of 1093, a concentration of the solid content of 100%, and a viscosity of 1900 mPa s at 25°C.

### (Preparation Example 7) Hydroxyl Group-terminated Urethane Prepolymer (D-400/MDI)

4,4'-diphenylmethane diisocyanate (MDI) was used as the second material polyisocyanate. Further, ACTCOL D-400 (that is a trade name of a polyether polyol having a number average molecular weight of 400 and an average number of hydroxyl groups of 2, and manufactured by Mitsui Chemicals, Inc.) was used as the second material polyol. The equivalent ratio (OH/NCO) was set to 2.02. Further, these were subjected to a urethane-forming reaction at 60°C for 7 hours.

Except for the above, in the same manner as Preparation Example 4, a hydroxyl group-terminated urethane prepolymer was produced. The hydroxyl group-terminated urethane prepolymer had a hydroxyl value of 524, a concentration of the solid content of 100%, and a viscosity of 73600 mPa·s at 25°C.

### (Preparation Example 8) Hydroxyl Group-terminated Urethane Prepolymer (D-400/HDI)

A hexamethylene diisocyanate (HDI) was used as the second material polyisocyanate. Further, ACTCOL D-400 (that is a trade name of a polyether polyol having a number average molecular weight of 400 and an average number of hydroxyl groups of 2, and manufactured by Mitsui Chemicals, Inc.) was used as a second material polyol. The equivalent ratio (OH/NCO) was set to 2.02. Further, these were subjected to a urethane-forming reaction at 110°C for 18 hours.

Except for the above, in the same manner as Preparation Example 4, a hydroxyl group-terminated urethane prepolymer was produced. The hydroxyl group-terminated urethane prepolymer had a hydroxyl value of 484, a concentration of the solid content of 100%, and a viscosity of 2700 mPa·s at 25°C.

### (Preparation Example 9) Macropolyol

ACTCOL D-1000 (that is a trade name of a polyether polyol having a number average molecular weight of 1000 and an average number of hydroxyl groups of 2, and manufactured by Mitsui Chemicals, Inc.) was prepared as a macropolyol.

### (Preparation Example 10) Macropolyol

ACTCOL EP-330N (a polyoxyalkylene polyol (a block copolymer of propylene oxide-ethylene oxide) having an average functionality of 3 and a number average molecular weight of 5000, and manufactured by Mitsui Chemicals, Inc.) was prepared as a macropolyol.

### (Preparation Example 11) Low Molecular-weight Polyol

1,4-butanediol (1,4-BD) was prepared as a low molecular-weight polyol.

### Examples 1 to 12 and Comparative Examples 1 to 5

Further, according to each formulation (solid content) shown in Tables 1 to 3, the components were mixed, thereby preparing a polyisocyanate component and a polyol component. 860 ppm of a catalyst (DABCO 33-LV) was added to the polyol component. In this manner, a structural polyurethane adhesive containing the polyisocyanate component and the polyol component was produced.

Examples 2 and 3 were prepared in formulations in which the type of the hydroxyl group-terminated urethane prepolymer was changed as compared with Example 1. Examples 4 to 7 and Examples 11 and 12 were prepared in formulations in which the amount of the hydroxyl group-terminated urethane prepolymer was changed as compared with Example 1. Further, Example 8 was prepared in a formulation in which the macropolyol was not blended as compared with Examples 1 to 3. Further, Example 9 was prepared in a formulation in which the MDI carbodiimide was not blended as compared with Example 1. Further, Example 10 was prepared in a formulation in which the MDI carbodiimide was not blended and instead another isocyanate group-terminated urethane prepolymer was blended as compared with Example 1.

Further, Comparative Example 1 was prepared in a formulation in which the hydroxyl group-terminated urethane prepolymer was not blended as compared with Example 1. Further, Comparative Examples 2 to 3 were prepared in formulations in which the type of the hydroxyl group-terminated urethane prepolymer was changed as compared with Example 1. Further, Comparative Example 4 was prepared in a formulation in which the hydroxyl group-terminated urethane prepolymer was changed to a macropolyol as compared with Example 1.

Further, Comparative Example 5 was prepared in a formulation in which the hydroxyl group-terminated urethane prepolymer was not blended as compared with Example 9.

### (Evaluations)

### 1. Adhesive Test (PP/SPCC)

A test piece was prepared by cutting a polypropylene plate (J707G, manufactured by Prime Polymer Co., Ltd. (PP)) into a width of 25mm. The test piece was subjected to corona treatment and adjusted to have a wettability of 40 dyn/cm or more (JIS K 6768 (1999)) immediately before the production of an adhesive test piece. The test piece was prepared as an adherend 1.

Meanwhile, an ED-SPCC plate (JIS G 3141 (SPCC, SD), manufactured by Test Piece Co.) was prepared by cutting a Steel Plate Cold Commercial (SPCC) into a width of 25 mm and subjecting the cut SPCC to cation electrodeposition (ED). Next, the surface of the SPCC was degreased and washed using isopropyl alcohol and thereafter dried. The ED-SPCC plate was prepared as an adherend 2.

A polyisocyanate component and a polyol component were mixed in a ratio in which the equivalent ratio (NCO/OH) was 1.05. Next, glass beads (ASGB-60, manufactured by AS ONE Corporation., 0.250 to 0.355 mm) were added to the obtained mixture to adjust the layer thickness. The adding amount of the glass beads was adjusted to 1% by mass with respect to the total amount of the polyisocyanate component, the polyol component, and the glass beads.

Thereafter, the above-described mixture was applied to the adherend 1. The adherend 1 and adherend 2 were brought into tight contact with each other so as to have an adhesive area of 25 mm × 12.5 mm and an adhesive layer thickness of 0.3 mm, and cured at 25°C for 1 hour, and aged at room temperature (18 to 28°C and 45 to 55%RH) for a week. In this manner, an adherend test piece (hereinafter, referred to as a test plate) was produced.

The shear bond strength (hereinafter, referred to as adhesive strength) [MPa] between the adherend 1 and the adherend 2 was measured at a tensile rate of 50 mm/min using a tensile test machine (U-4410, manufactured by Orientec, Co., Ltd.).

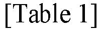

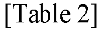

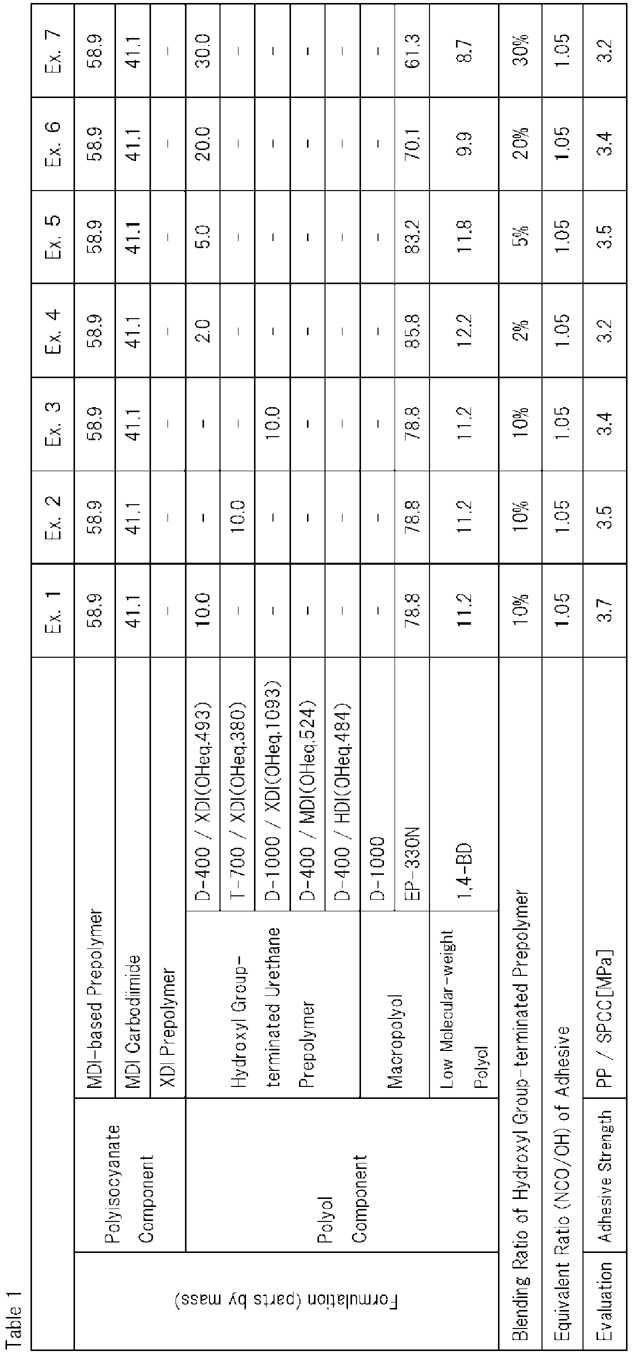

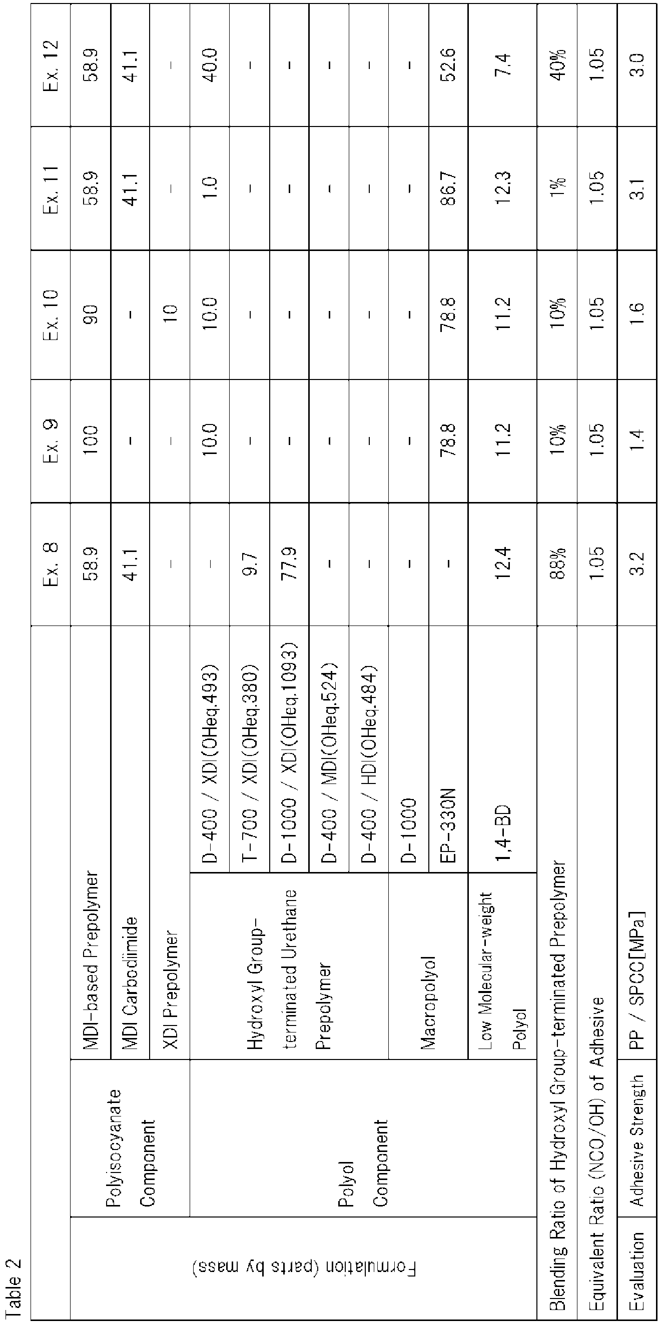

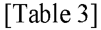

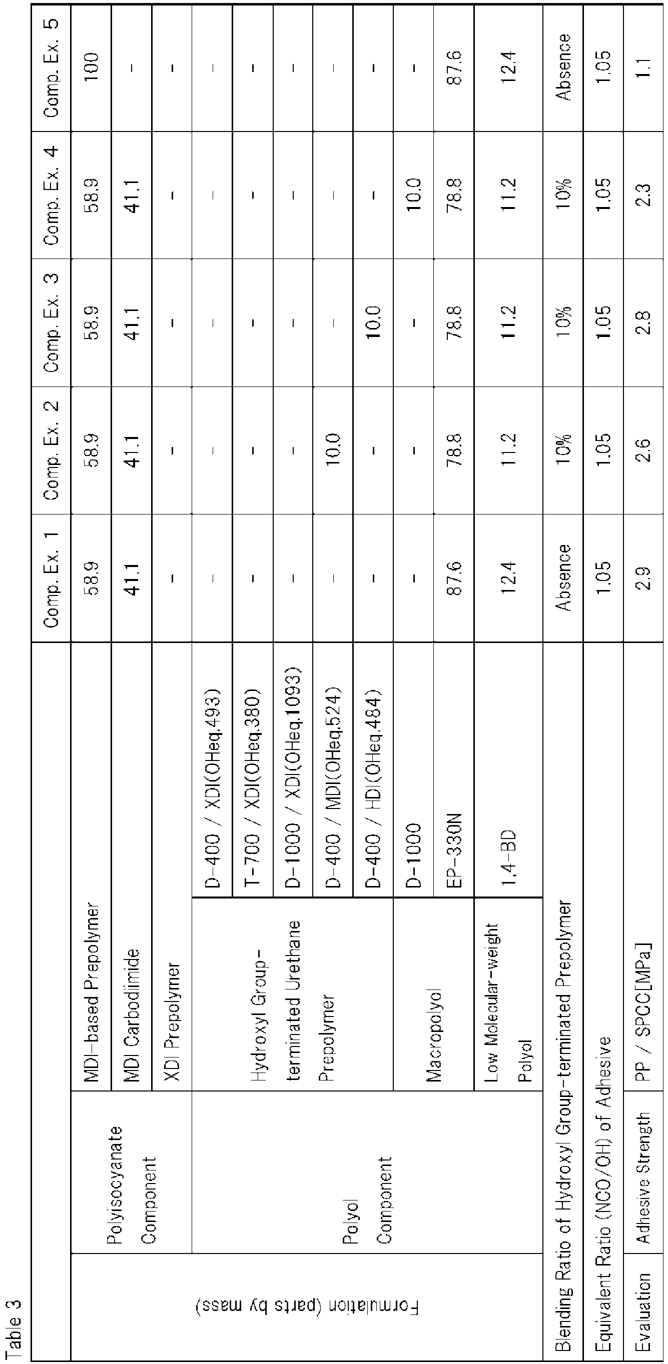

### 2. Adhesive Test (CFRP/SPCC)

A 2.0 × 25 × 100 mm CFRP (matte) manufactured by Standard Test Piece was prepared. Next, the surface of the CFPR was degreased and washed with isopropyl alcohol and thereafter dried. The CFRP was prepared as an adherend 1. Except for that, in the same manner as the above-described Adhesive Test (PP/SPCC), the adhesive strengths of Examples 1 to 3 and Comparative Example 4 were measured.

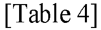

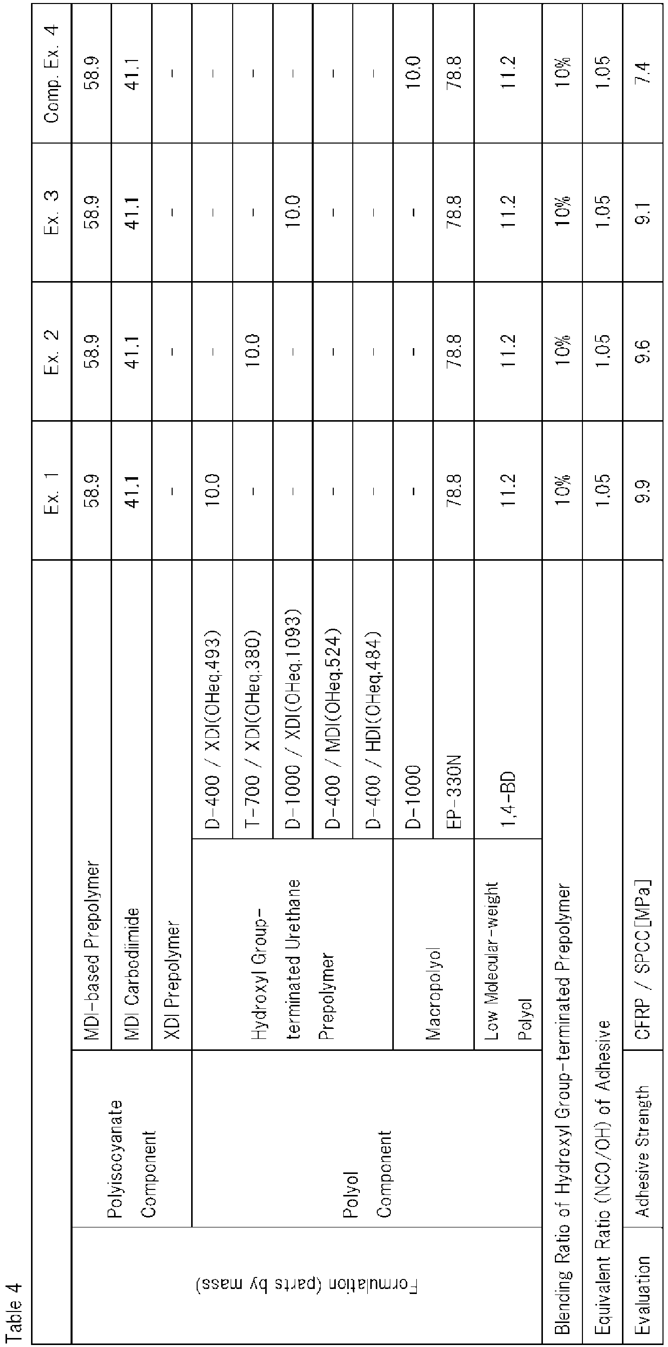

### 3. Workability

Of each of Examples 1 to 3 and Comparative Example 4, the polyisocyanate component and the polyol component were mixed so that the equivalent ratio (NCO/OH) was 1.05. The mixture was applied to an acrylic plate so that the mixture had a thickness of 1 mm. Then, the solidification time and working life of the mixture were measured using a drying time recorder (Dry Time Tester II, manufactured by Taiyu Kizai).

The solidification time indicates the time when the needle of the drying time recorder is brought onto the upper surface of the applied film. Further, the working life indicates the time when the applied film is backfilled after the needle passes through. Then, the ratio (solidification time/working life) of the solidification time with respect to the working life was calculated. The smaller the ratio (solidification time/working life) is, the relatively longer the working life is and the relatively shorter the solidification time is. Thus, a smaller ratio exhibits excellent workability.

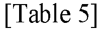

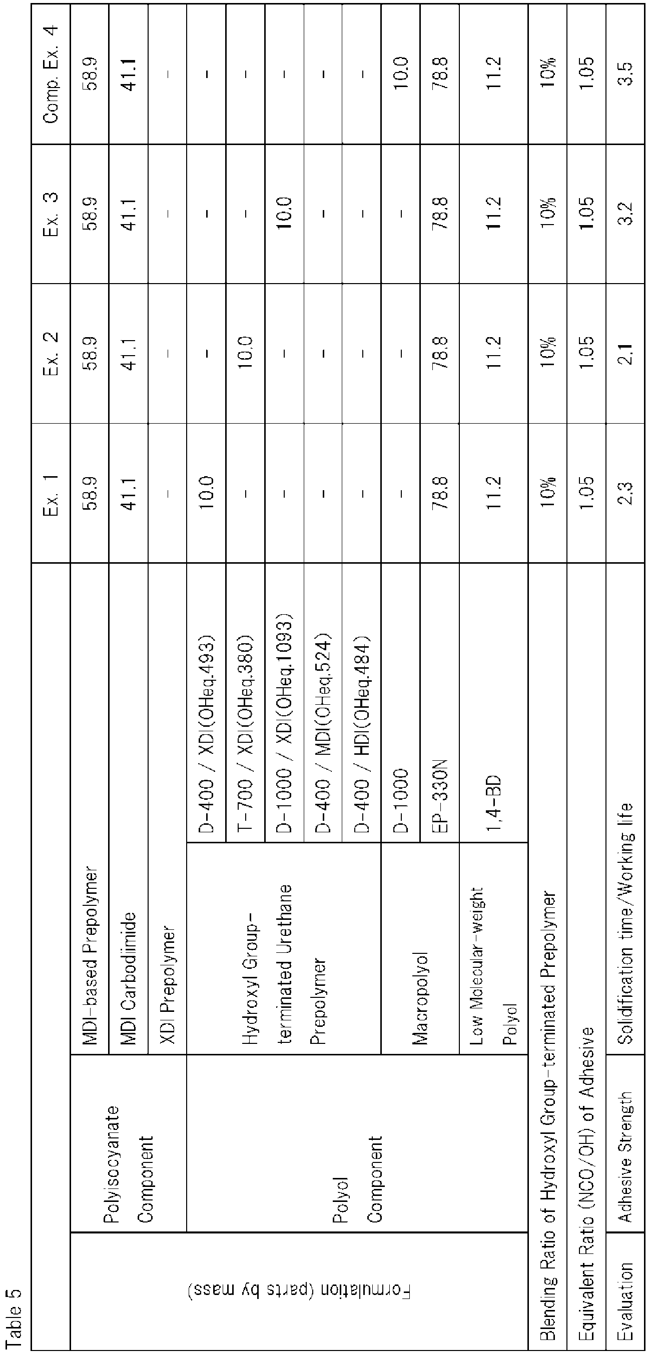

While the illustrative embodiments of the present invention are provided in the above description, such is for illustrative purpose only and it is not to be construed as limiting in any manner. Modification and variation of the present invention that will be obvious to those skilled in the art is to be covered by the following claims.

### Industrial Applicability

The structural polyurethane adhesive of the present invention is suitably used for bonding a plurality of members in a structure formed from the members.

## Claims

1. A structural polyurethane adhesive comprising:
a polyisocyanate component; and a polyol component,
wherein the polyisocyanate component contains an isocyanate group-terminated urethane prepolymer that is a reaction product of a first material polyisocyanate containing an aromatic polyisocyanate and a first material polyol containing a macropolyol, and
wherein the polyol component contains:
a hydroxyl group-terminated urethane prepolymer that is a reaction product of a second material polyisocyanate containing an araliphatic polyisocyanate and/or an alicyclic polyisocyanate and a second material polyol containing a macropolyol; and
a low molecular-weight polyol.

2. The structural polyurethane adhesive according to claim 1, wherein a ratio of the hydroxyl group-terminated urethane prepolymer with respect to a total amount of the polyol component is 2% by mass or more and 30% by mass or less.

3. The structural polyurethane adhesive according to claim 1, wherein the polyisocyanate component further contains a carbodiimide-modified product of an aromatic polyisocyanate monomer.

4. The structural polyurethane adhesive according to claim 1, wherein the polyol component further contains a polyether polyol having an average number of hydroxyl groups of 3 or more.

5. The structural polyurethane adhesive according to claim 1, wherein the first material polyisocyanate contains diphenylmethane diisocyanate.

6. The structural polyurethane adhesive according to claim 1, wherein the second material polyisocyanate contains xylylene diisocyanate.

7. The structural polyurethane adhesive according to claim 1, wherein the hydroxyl group-terminated urethane prepolymer has a hydroxyl equivalent of 550 or less.

8. The structural polyurethane adhesive according to claim 1, being a two-component curable adhesive including a main agent containing the polyisocyanate component and a curing agent containing the polyol component.

9. The structural polyurethane adhesive according to claim 1, being a solventless-type adhesive.
